# EUROPÄISCHE PATENTSCHRIFT

(11) **EP 3 766 651 B1**
(45) Veröffentlichungstag und Bekanntmachung des Hinweises auf die Patenterteilung: **15.06.2022**
(21) Anmeldenummer: 19186795.1
(22) Anmeldetag: 17.07.2019
(51) Int. Cl.: B27N 3/00, B05D 1/38, B05D 3/06, B05D 7/08, B05D 7/00, B27N 7/00, B32B 3/30, B44C 1/24, B44C 3/02, B44C 5/04, B32B 21/02, B32B 21/14

(54) **PANEELE MIT STRUKTURIERTER LACKOBERFLÄCHE**
PANELS WITH A STRUCTURED COATING SURFACE
PANNEAUX À SURFACE DE PEINTURE STRUCTURÉE

(43) Veröffentlichungstag der Anmeldung: 20.01.2021
(73) Patentinhaber: Akzenta Paneele + Profile GmbH, 56759 Kaisersesch (DE)
(72) Erfinder: Hüllenkremer, Felix, 56076 Koblenz (DE); Hoff, Egon, 56869 Mastershausen (DE); Buhlmann, Carsten, 15834 Rangsdorf (DE)
(74) Vertreter: Michalski Hüttermann & Partner Patentanwälte mbB

(56) Entgegenhaltungen:
- EP-A1- 2 236 313
- EP-A1- 2 700 508
- EP-A1- 3 278 982
- EP-A2- 1 454 763
- CN-A- 106 696 578
- US-A1- 2016 207 064
- US-B1- 6 555 177
- Anonymous: "Maserung - Wikipedia", , 13. Februar 2019 (2019-02-13), Seiten 1-2, XP055662334, Gefunden im Internet: URL:https://de.wikipedia.org/wiki/Maserung [gefunden am 2020-01-27]

## Beschreibung

Die vorliegende Erfindung betrifft Paneele mit strukturierter Lackoberfläche und ein Verfahren zur Herstellung von Paneelen mit strukturierter Lackoberfläche.

Paneele mit strukturierter Lackoberfläche sind an sich bekannt und werden insbesondere bei Dekorpaneelen zur Verbesserung der haptischen Eigenschaften, Erhöhung der Wertigkeit und zum Verschleißschutz verwendet.

Unter dem Begriff Dekorpaneel sind Wand-, Decken, Tür- oder Bodenpaneele zu verstehen, welche ein auf eine Trägerplatte aufgebrachtes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau verwendet. Eine der häufigsten Einsatzbereiche von Dekorpaneelen ist deren Nutzung als Fußbodenbelag, zum Verkleiden von Decken, Wänden oder Türen. Die Dekorpaneele weisen dabei vielfach ein Dekor und eine Oberflächenstrukturierung auf, welche einen Naturwerkstoff imitieren soll.

Beispiele für solche nachempfundenen Naturwerkstoffe sind Holzarten wie beispielsweise Ahorn, Eiche, Birke, Kirsche, Esche, Nussbaum, Kastanie, Wenge oder auch exotische Hölzer wie Panga-Panga, Mahagoni, Bambus und Bubinga. Darüber hinaus werden vielfach Naturwerkstoffe wie Steinoberflächen oder Keramikoberflächen nachempfunden.

Bisher werden solche Dekorpaneele vielfach als Laminate hergestellt, bei welchen auf eine Trägerplatte ein mit einem gewünschten Dekor vorbedrucktes Dekorpapier aufgebracht wird, auf welches dann wiederum ein sogenanntes Overlay aufgebracht wird. Nachdem gegebenenfalls noch auf der dem Dekorpapier gegenüberliegenden Seite der Trägerplatte ein Gegenzugpapier aufgebracht wurde, wird der erhaltene Schichtenaufbau unter Verwendung geeigneter druck- und/oder wärmeaktivierter Klebemittel fest miteinander verbunden.

Zum Schutz des Paneels und insbesondere der gegebenenfalls aufgebrachten Dekorschicht werden dabei in der Regel Verschleiß- oder Deckschichten auf das Paneel aufgebracht, die häufig auf Melaminharz basieren. Vielfach ist es vorgesehen, dass in solche Verschleiß- oder Deckschichten eine eine Dekorvorlage imitierende Oberflächenstrukturierung eingebracht ist, so dass die Oberfläche des Dekorpaneels eine haptisch wahrnehmbare Struktur aufweist, welche ihrer Form und ihrem Muster dem aufgebrachten Dekor angepasst ist, um so eine möglichst originalgetreue Nachbildung eines natürlichen Werkstoffes auch hinsichtlich der Haptik zu erhalten.

Bei dem Ausbilden von strukturierten Verschleißschutzschichten mit Lacken wird die Struktur dabei häufig in bekannter Weise durch Prägewerkzeuge direkt in die aufgebrachte Lackschicht eingebracht. Nachteilig an derartigen Verfahren kann es sein, dass insbesondere das Ausbilden von kleinen und lokal begrenzten Strukturen, wie etwa von Poren, nur schwer möglich ist. Darüber hinaus kann die genaue Ausrichtung der Prägewerkzeuge relativ zum Dekor Probleme bereiten. Zudem sind Variationen der Struktur nur aufwendig realisierbar und es sind beispielsweise kleine Produktionsserien vergleichsweise unwirtschaftlich, da Prägewerkzeuge für jede Serie hergestellt und ausgetauscht werden müssen.

Paneele mit individualisierter, qualitativ besonders hochwertiger und/oder an das Dekor angepasster Strukturierung werden deswegen mit besonderen Verfahren realisiert, die unter Umständen eine erhebliche Prozessanpassung benötigen und entsprechend nicht für vergleichbare Produktionsmengen geeignet sind.

Häufig weisen Paneele deswegen keine Strukturierung oder nur einfache Strukturierungen auf, die nicht individualisiert oder an das Dekor angepasst sind. Besonders einfache Paneele weisen beispielsweise nur eine unstrukturierte Melaminschicht als Oberfläche auf. Strukturierte Oberflächen von Paneelen und deren Herstellung können deswegen noch Verbesserungspotential bieten.

EP 1 454 763 A1, die den Oberbegriff des Anspruchs 1 offenbart, offenbart ein Verfahren zum Veredeln einer Holz- oder Holzwerkstoffplatte, insbesondere MDF- oder HDF-Platte mit einer Oberseite und einer Unterseite, zeichnet sich durch folgende Schritte aus: a): Auftragen einer Versiegelungsschicht aus Melaminharz auf die Oberseite der Platte, b): Aufdrucken eines Dekors auf die Versiegelungsschicht, c): Auftragen einer Schutzschicht aus Melaminharz auf das Dekor, d): Verpressen der Platte unter Temperatureinwirkung, bis die Schutzschicht und die Versiegelungsschicht schmelzen und sich unter Einschluss des aufgedruckten Dekors miteinander verbinden.

CN 106696578 A1 offenbart eine dekorative Platte mit einem Stereomuster. Die Dekorplatte besteht aus einer Grundplattenschicht, einer Melaminharzschicht, einer geschliffenen Holzmischungsschicht mit einem konvex-konkaven Stereomuster und einer Lackschicht. Erfindungsgemäß wird geschliffenes Holz verwendet, und da geschliffenes Holz eine gute Plastizität aufweist und bequem zu formen ist, kann eine Vielzahl von konvex-konkaven Stereomustern nach Bedarf verarbeitet werden; und Verarbeitungstechnologie ist einfach und weist eine hohe Produktionseffizienz auf.

EP 2 236 313 A1 offenbart ein Verfahren zum Herstellen von Paneelen zeichnet sich aus durch folgende Schritte. a) Bereitstellen einer großformatigen, pressblanken Trägerplatte aus Holzwerkstoff, die zumindest auf ihrer Oberseite eine bei ihrer Herstellung entstandene Presshaut aufweist, b) Abschleifen eines Teils der Presshaut von der Oberseite der Trägerplatte, c) Auftragen einer Grundierung aus einem flüssigen Harz auf Melaminbasis auf die Oberseite der Trägerplatte, wobei das Harz wenigstens teilweise in die obere Randschicht der Trägerplatte hinein diffundiert und den verbliebenen Bereich der Presshaut zumindest teilweise durchdringt und vergütet, d) Trocknen der Grundierung, e) Auftragen eines Primers auf die Grundierung, f) Trocknen des Primers, g) Auftragen wenigstens eines mit Farbpigmenten angereicherten, wasserbasierten Lackes zur Erzeugung eines Dekors, h) Trocknen des Dekors, i) Aufbringen einer Versiegelung aus wenigstens einem mit abriebfesten Partikeln und Zellulosefasern angereicherten Harz auf Melaminbasis, j) Trocken der Versiegelung, k) Auftragen einer Grundierung aus einem flüssigen Harz auf Melaminbasis auf die Unterseite der Trägerplatte, wobei das Harz wenigstens teilweise in die untere Randschicht der Trägerplatte hinein diffundiert, 1) Trocknen der Grundierung, m) Aufbringen eines Gegenzuges auf die Unterseite der Trägerplatte, n) Verpressen des Schichtaufbaues unter Wirkung und von Druck und Temperatur, o) Aufteilen der Trägerplatte in Paneele gewünschter Breite und Länge, p) Anbringen von Verbindungsmitteln und Verriegelungselementen an sich gegenüberliegenden Seitenkanten zum leimlosen Verbinden und Verriegeln mehrerer Paneele zu einem schwimmend verlegten Fußbodenverbund.

US 2016/0207064 A1 offenbart ein Verfahren zum Beschichten eines Kunststoffbauteils mit einem Lack, wobei in einem Flutungsschritt eine Oberfläche des zu beschichtenden Kunststoffbauteils mit Lack durch Auftragen auf einen Flutungsbereich und mit einer Lackschicht versehen wird, indem der Lack durch einen Abflussbereich abfließt. Um die Beschichtung von komplexen dreidimensionalen Bauteilen zu ermöglichen, wird vor der Durchführung des Flutungsschritts der Abtropfbereich in einem Spritzschritt oder alternativ in einem separaten vorgeschalteten Flutungsschritt mit Farbe versehen, so dass ein Lacküberzug entsteht dem Abtropfbereich, der aus aufgesprühtem oder separat geflutetem Lack und geflutetem Lack besteht, und im Überflutungsbereich der zu beschichtenden Oberfläche eine Lackschicht gebildet wird, die nur aus dem gefluteten Lack besteht.

EP 2 700 508 A1 schlägt ein Verfahren zur Herstellung eines dekorierten Wand- oder Bodenpaneels vor, aufweisend die Verfahrensschritte a) Bereitstellen eines plattenförmigen Trägers, b) Aufbringen eines Primer zumindest auf die zu bedruckend Oberfläche des plattenförmigen Trägers, c) Aufbringen eines Dekors mittels bedrucken zumindest eines Teils der mit dem Primer behandelten Oberfläche, wobei als Primer eine flüssige strahlungshärtbare Mischung auf Basis eines Urethanacrylates eingesetzt wird.

US6555177 B1 beschreibt ein Verfahren zur Veredelung von Hartholzböden auf Keramikbasis, das gegen Plattenbildung beständig ist, eine verbesserte Haltbarkeit aufweist und für den Einsatz vor Ort geeignet ist. Das Verfahren besteht darin, aufeinanderfolgende Schichten von wasserbasierter Grundierung, Panzerbeschichtung und Deckbeschichtung aufzutragen. Die wasserbasierte Grundierung verwendet einen geringen Harzgehalt und eine niedrige Co-Solvent-Konzentration, um die Plattenbildung von Hartholzplatten erheblich zu reduzieren. Die wasserbasierte Panzerbeschichtung besteht aus großteiligen Keramikadditiven, die in Kombination mit einem geringen Harzgehalt die Bildung einer mikroskopischen Wulststruktur auf der Oberfläche des Finishs ermöglichen, die eine verbesserte Haltbarkeit bietet.

EP 3 278 982 A1 stellt eine dekorative Folie bereit, die geformten Harzartikeln eine ausgezeichnete Designattraktivität und eine ausgezeichnete Haptik sowohl aufgrund einer robusten Form verleihen kann. Die dekorative Folie umfasst, in der folgenden Reihenfolge überlagert, eine Grundschicht, eine Oberflächenschicht, die aus einem gehärteten Gegenstand besteht, der aus einer härtbaren Harzzusammensetzung erhalten wurde und die raue Form hat, und einen entfernbaren thermoplastischen Harzfilm.

Es ist daher die Aufgabe der vorliegenden Erfindung, Paneele mit strukturierter Lackoberfläche bereitzustellen, welche die aus dem Stand der Technik bekannten Probleme zumindest teilweise überwinden.

Gelöst wird diese Aufgabe durch ein Paneel mit strukturierter Lackoberfläche gemäß Anspruch 1 sowie ferner durch ein Verfahren nach Anspruch 8. Bevorzugte Ausgestaltungen der Erfindung sind in den Unteransprüchen, in der Beschreibung oder in der Figur angegeben, wobei weitere in den Unteransprüchen, in der Beschreibung oder in der Figur beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Mit der Erfindung wird ein Paneel gemäß Anspruch 1 mit strukturierter Lackoberfläche vorgeschlagen. Das Paneel weist ein Basispaneel, eine Melaminharzschicht, eine Haftvermittlerschicht und eine lackhaltige Deckschicht, wobei die Melaminharzschicht auf einer Oberfläche des Basispaneels angeordnet ist, die Haftvermittlerschicht auf der Melaminharzschicht angeordnet ist und die lackhaltige Deckschicht auf der Haftvermittlerschicht angeordnet ist, wobei die lackhaltige Deckschicht strukturiert ist.

Es hat sich in überraschender Weise gezeigt, dass durch die Haftvermittlerschicht Paneele mit einer Melaminharzschicht auch nachträglich mit einer strukturierten Lackoberfläche versehen werden können. Die erfindungsgemäßen Paneele sind in dem Anspruch 1 definiert und sind gegenüber bekannten Paneelen mit strukturierten Lackoberflächen einfacher herstellbar, weil die Strukturierung im Nachgang zu einem bestehenden Prozess einfacher Paneele mit Melaminharzschicht erfolgen kann, ohne den Prozess umstellen zu müssen. Gegenüber einfach herstellbaren Paneelen können die erfindungsgemäßen Paneele mit einer präziseren und individuelleren Strukturierung versehen werden, da andere Strukturierungsmethoden verwendet werden können.

Unter dem Begriff "Basispaneel" ist ein Paneel zu verstehen, welches gegebenenfalls noch keine Verschleiß- und/oder Deckschicht aufweist. Darunter ist zu verstehen, dass das Basispaneel zumindest einen Träger aufweist, wobei unter einem "Träger" insbesondere eine in einem fertiggestellten Paneel als Kern beziehungsweise als Basislage dienende Lage verstanden werden kann, die insbesondere einen Naturstoff, wie etwa einen Holzwerkstoff, einen Faserwerkstoff oder einen Werkstoff umfassend einen Kunststoff aufweisen kann. Beispielsweise kann der Träger einem Paneel eine geeignete Stabilität verleihen oder zu dieser beitragen.

Holzwerkstoffe sind dabei neben Vollholzwerkstoffen auch Materialien wie z.B. Brettsperrholz, Brettschichtholz, Stabsperrholz, Furniersperrholz, Furnierschichtholz, Furnierstreifenholz und Biegesperrholz. Darüber hinaus sind unter Holzwerkstoffen auch Holzspanwerkstoffe wie z.B. Spanpressplatten, Strangpressplatten, Grobspanplatten (Oriented Structural Board, OSB) und Spanstreifenholz sowie auch Holzfaserwerkstoffe wie z.B. Holzfaserdämmplatten (HFD), mittelharte und harte Faserplatten (MB, HFH), sowie insbesondere mitteldichte Faserplatten (MDF) und hochdichte Faserplatten (HDF) zu verstehen. Auch moderne Holzwerkstoffe wie Holz-Polymer-Werkstoffe (Wood Plastic Composite, WPC), Sandwichplatten aus einem leichten Kernmaterial wie Schaumstoff, Hartschaum oder Papierwaben und einer darauf aufgebrachten Holzschicht, sowie mineralisch, z.B. mit Zement, gebundene Holzspanplatten bilden Holzwerkstoffe im Sinne dieser Offenbarung. Auch Kork stellt dabei einen Holzwerkstoff im Sinne dieser Offenbarung dar.

Kunststoffe, welche bei der Herstellung entsprechender Basispaneele beziehungsweise der Träger eingesetzt werden können, sind beispielsweise thermoplastische Kunststoffe, wie Polyvinylchlorid, Polyolefine (beispielsweise Polyethylen (PE), Polypropylen (PP), Polyamide (PA), Polyurethane (PU), Polystyrol (PS), Acrylnitril-Butadien-Styrol (ABS), Polymethylmethacrylat (PMMA), Polycarbonat (PC), Polyethylenterephthalat (PET), Polyetheretherketon (PEEK) oder Mischungen oder Co-Polymerisate dieser. Die Kunststoffe können übliche Füllstoffe enthalten, beispielsweise Kalziumcarbonat (Kreide), Aluminiumoxid, Kieselgel, Quarzmehl, Holzmehl, Gips. Auch können sie in bekannter Weise eingefärbt sein.

Der Träger kann dabei insbesondere ein bahnartiger Träger oder plattenförmiger Träger sein.

Unter einem "bahnartigen Träger" kann dabei ein Träger verstanden werden, der etwa in seinem Herstellungsprozess eine bahnartige und damit im Vergleich zu seiner Dicke beziehungsweise Breite deutlich größere Länge aufweist und deren Länge beispielsweise größer als 15 Meter betragen kann.

Unter einem "plattenförmigen Träger" kann dabei ferner ein Träger verstanden werden, der durch Vereinzelung aus dem bahnartigen Träger geformt ist und in der Form einer Platte ausgebildet ist. Ferner kann der plattenförmige Träger bereits die Form und/oder Größe des herzustellenden Paneels vorgeben. Jedoch kann der plattenförmige Träger auch als Großplatte vorgesehen sein. Eine Großplatte ist dabei insbesondere ein Träger, dessen Abmessungen die Abmessungen der letztendlichen Dekorpaneele um ein Mehrfaches überschreiten und welche im Laufe des Herstellungsverfahrens in eine entsprechende Mehrzahl von Dekorpaneelen zerteilt wird, beispielsweise durch Sägen, Laser- oder Wasserstrahlschneiden. Beispielsweise kann die Großplatte dem bahnförmigen Träger entsprechen.

Unter dem Begriff "Melaminharzschicht" ist eine Schicht zu verstehen, die ein Melaminharz aufweist, vorzugsweise im Wesentlichen aus einem Melaminharz besteht.

Unter dem Begriff "Haftvermittlerschicht" ist eine Schicht zu verstehen, die einen Haftvermittler aufweist. Unter einem Haftvermittler sind dabei Zusammensetzungen zu verstehen, die dazu geeignet sind, eine bessere Verbindung zwischen zwei Materialien zu erzeugen.

Unter dem Begriff "lackhaltige Deckschicht" ist eine Schicht zu verstehen, die einen Decklack aufweist, vorzugsweise im Wesentlichen aus einem Decklack besteht.

Ein vorbeschriebenes Paneel kann demnach insbesondere eine bessere Herstellbarkeit und/oder eine hochwertigere oder individualisiertere Strukturierung aufweisen.

Im Detail weist das erfindungsgemäße Paneel ein Basispaneel auf, welches auf einer Oberfläche eine Melaminharzschicht aufweist. Das Basispaneel mit Melaminharzschicht kann beispielsweise ein übliches Laminat mit Melaminharzbeschichtung sein. Insbesondere kann das Basispaneel mit Melaminharzschicht ein Halbzeug aber auch ein fertiges Paneel sein. Das Paneel weist zudem eine Haftvermittlerschicht auf der Melaminharzschicht auf und eine auf der Haftvermittlerschicht angeordnete lackhaltige Deckschicht. Die Haftvermittlerschicht vermittelt dabei die Haftung zwischen Melaminharzschicht und lackhaltiger Deckschicht. Dadurch können sich die vorbeschriebenen Vorteile ergeben, dass Paneele mit einer Melaminharzschicht auch nachträglich mit einer strukturierten Lackoberfläche versehen werden können und die Paneele gegenüber bekannten Paneelen mit strukturierten Lackoberflächen einfacher herstellbar sind, sowie gegenüber einfach herstellbaren Paneelen mit einer präziseren und individuelleren Strukturierung versehbar sind.

Die Melaminharzschicht kann dabei ein vollständig gehärtetes Melaminharz aufweisen.

Alternativ kann die Melaminharzschicht auch teilweise gehärtetes Melaminharz aufweisen. Unter Melaminharz ist dabei das Kondensationsprodukt von Melamin und Formaldehyd zu verstehen. Darunter sind auch modifizierte Melaminharze zu verstehen. Beispielsweise kann die Melaminharzschicht harnstoffmodifiziertes Melaminharz aufweisen, also das Kondensationsprodukt aus Melamin, Harnstoff und Formaldehyd.

Das Basispaneel weist eine ein Dekor aufweisende Dekorschicht auf und die Melaminharzschicht auf der Dekorschicht angeordnet ist.

Dadurch kann das Paneel mit strukturierter Lackoberfläche einen dekorativen Eindruck vermitteln.

Ein Dekor kann beispielsweise auf den Träger aufgebracht sein, beispielsweise durch ein Druckverfahren. Dabei kann ferner auf dem Träger ein geeigneter Druckuntergrund vorgesehen sein. Alternativ ist es nicht ausgeschlossen, dass das Dekor derart aufgebracht ist, dass beispielsweise eine bereits bedruckte Faserschicht, wie beispielsweise Papierschicht, oder auch eine bereits bedruckte Folie, wie beispielsweise aus Polyethylen, Polypropylen oder Polyvinylchlorid, auf den Träger aufgebracht wird.

Es sind unter dem Begriff Faserwerkstoffe Materialien wie z.B. Papier und Vliese auf Basis pflanzlicher, tierischer, mineralischer oder auch künstlicher Fasern zu verstehen, ebenso wie Pappen. Beispiele sind Faserwerkstoffe aus pflanzlichen Fasern sind neben Papieren und Vliesen aus Zellstofffasern Platten aus Biomasse wie Stroh, Maisstroh, Bambus, Laub, Algenextrakte, Hanf, Baumwolle oder Ölpalmenfasern. Beispiele für tierische Faserwerkstoffe sind keratinbasierte Materialien wie z.B. Wolle oder Rosshaar. Beispiele für mineralische Faserwerkstoffe sind Mineralwolle oder Glaswolle.

In einer bevorzugten Ausgestaltung der Erfindung kann vorgesehen sein, dass die Struktur der lackhaltigen Deckschicht zumindest in Teilbereichen synchron zum Dekor der Dekorschicht ist.

Dadurch kann erreicht werden, dass das Paneel mit strukturierter Lackoberfläche einen besonders realistischen Dekoreindruck vermittelt. Insbesondere kann die zumindest in Teilbereichen synchrone Strukturierung dazu führen, dass der haptische Eindruck des Paneels mit dem optischen Eindruck des Dekors übereinstimmt.

In einer bevorzugten Ausgestaltung der Erfindung kann vorgesehen sein, dass das Basispaneel an die Oberfläche angrenzende Kanten aufweist und die lackhaltige Deckschicht zusätzlich auf den Kanten angeordnet ist.

Darunter ist zu verstehen, dass das die lackhaltige Deckschicht auch über die von der Melaminharzschicht bedeckten Bereiche des Basispaneels hinaus angeordnet sein kann. Demzufolge kann die lackhaltige Deckschicht teilweise direkt auf dem Basispaneel angeordnet sein.

Dadurch kann erreicht werden, dass das Paneel auch an Kanten durch die lackhaltige Deckschicht geschützt wird. Beispielweise können dadurch einfache hergestellt Laminate mit Melaminharzschicht nach einer Vereinzelung an den Schnittkanten mit der lackhaltigen Deckschicht geschützt werden.

Erfindungsgemäß ist vorgesehen, dass die Haftvermittlerschicht eine gehärtete säurehärtbare und/oder strahlungshärtbare Haftvermittlerzusammensetzung aufweist.

In einer bevorzugten Ausgestaltung, nicht gemäß der beanspruchten Erfindung, kann vorgesehen sein, dass die Haftvermittlerschicht ein gehärtetes Aminoplast als Haftvermittlerzusammensetzung aufweist, vorzugsweise ein Harnstoffharz, ein Melaminharz und/oder ein Melaminharnstoffharz.

Dadurch kann erreicht werden, dass die Haftvermittlerschicht besonders gut auf der Melaminharzschicht haftet. Ein Haften der Haftvermittlerschicht auf Basis von Aminoplasten an die lackhaltige Deckschicht kann dabei insbesondere dadurch erreicht werden, dass die Haftvermittlerschicht vor einer Aufbringung der lackhaltigen Deckschicht noch nicht vollständig ausgehärtet sein muss.

Erfindungsgemäß ist vorgesehen, dass die Haftvermittlerschicht eine gehärtete Haftvermittlerzusammensetzung aufweist, welche eine polyurethanmodifizierte acrylatbasierte Haftvermittlerzusammensetzung umfasst.

Dadurch kann erreicht werden, dass die Haftvermittlerschicht besonders gut auf der Melaminharzschicht haftet und zugleich die lackhaltige Deckschicht besonders gut auf der Haftvermittlerschicht haftet. Acrylatbasierte Haftvermittlerzusammensetzungen sind zudem einfach härtbar und lassen sich leicht gleichmäßig aufbringen. Zudem kann durch die vorgeschlagenen Haftvermittlerzusammensetzungen erreicht werden, dass ein optischer Eindruck des Dekors nicht zu stark durch die verschiedenen Schichten beeinträchtigt wird.

In einer bevorzugten Ausgestaltung der Erfindung kann vorgesehen sein, dass die Haftvermittlerzusammensetzung Dipentaerythritol-Acrylat und ethoxyliertes Trimethylpropantriacrylat aufweist, vorzugsweise in einem Massenverhältnis von 1:2 bis 3:1.

In einer bevorzugten Ausgestaltung, nicht gemäß der beanspruchten Erfindung, kann vorgesehen sein, dass die Haftvermittlerzusammensetzung Dipentaerythritol-Acrylat aufweist in einer Menge von größer oder gleich 1 Gew.-% bis kleiner oder gleich 3 Gew.-%, bezogen auf die Haftvermittlerzusammensetzung.

In einer bevorzugten Ausgestaltung, nicht gemäß der beanspruchten Erfindung, kann vorgesehen sein, dass die Haftvermittlerzusammensetzung ethoxyliertes Trimethylpropantriacrylat aufweist in einer Menge von größer oder gleich 1 Gew.-% bis kleiner oder gleich 2 Gew.-%, bezogen auf die Haftvermittlerzusammensetzung.

Dabei weist die Haftvermittlerzusammensetzung als Hauptbestandteil vorzugsweise polyurethanmodifiziertes Acrylat auf.

Dadurch kann eine besonders gute Vernetzung in der Haftvermittlerschicht erreicht werden.

Zudem kann dadurch eine besonders gute Vernetzung der Haftvermittlerzusammensetzung mit dem Melaminharz der Melaminharzschicht und des Decklacks mit der Haftvermittlerzusammensetzung erreicht werden. Dadurch kann erreicht werden, dass das Paneel einen besonders festen Verbund der verschiedenen Schichten aufweist, wodurch das Paneel einen verbesserten Verschleißschutz aufweist.

In einer bevorzugten Ausgestaltung der Erfindung kann vorgesehen sein, dass die Haftvermittlerzusammensetzung zusätzlich Wasser aufweist und optional 2-Butoxyethanol, 4-Ethylmorpholin, 1,2-Benzisothiazol-3(2H)-on, Zinkpyrithion und/oder Reaktionsmasse aus 5-Chlor-2-methyl-4-isothiazolin-3-on und 2-Methyl-2H-isothiazol-3-on.

In einer bevorzugten Ausgestaltung, nicht gemäß der beanspruchten Erfindung, kann vorgesehen sein, dass die Haftvermittlerzusammensetzung 2-Butoxyethanol aufweist in einer Menge von größer oder gleich 1 Gew.-% bis kleiner oder gleich 3 Gew.-%, bezogen auf die Haftvermittlerzusammensetzung.

In einer bevorzugten Ausgestaltung, nicht gemäß der beanspruchten Erfindung, kann vorgesehen sein, dass die Haftvermittlerzusammensetzung 4-Ethylmorpholin aufweist in einer Menge von größer oder gleich 0,1 Gew.-% bis kleiner oder gleich 1 Gew.-%, bezogen auf die Haftvermittlerzusammensetzung.

In einer bevorzugten Ausgestaltung, nicht gemäß der beanspruchten Erfindung, kann vorgesehen sein, dass die Haftvermittlerzusammensetzung 1,2-Benzisothiazol-3(2H)-on aufweist in einer Menge von größer 0 Gew.-% bis kleiner oder gleich 0,05 Gew.-%, bezogen auf die Haftvermittlerzusammensetzung.

In einer bevorzugten Ausgestaltung, nicht gemäß der beanspruchten Erfindung, kann vorgesehen sein, dass die Haftvermittlerzusammensetzung Zinkpyrithion aufweist in einer Menge von größer oder gleich 0,001 Gew.-% bis kleiner oder gleich 0,01 Gew.-%, bezogen auf die Haftvermittlerzusammensetzung.

In einer bevorzugten Ausgestaltung, nicht gemäß der beanspruchten Erfindung, kann vorgesehen sein, dass die Haftvermittlerzusammensetzung Reaktionsmasse aus 5-Chlor-2-methyl-4-isothiazolin-3-on und 2-Methyl-2H-isothiazol-3-on aufweist in einer Menge von größer oder gleich 0 Gew.-% bis kleiner oder gleich 0,0015 Gew.-%, bezogen auf die Haftvermittlerzusammensetzung.

Dadurch kann vorteilhafter Weise erreicht werden, dass die Haftvermittlerzusammensetzung besonders gleichmäßig auftragbar ist und das Paneel somit eine besonders gleichmäßige Haftvermittlerschicht aufweist.

In einer besonders bevorzugten Ausgestaltung, nicht gemäß der beanspruchten Erfindung, kann vorgesehen sein, dass die Haftvermittlerzusammensetzung 2-Butoxyethanol, 4-Ethylmorpholin, 1,2-Benzisothiazol-3(2H)-on, Zinkpyrithion, 5-Chlor-2-methyl-4-isothiazolin-3-on und 2-Methyl-2H-isothiazol-3-on aufweist, jeweils vorzugsweise in den vorbeschriebenen Mengen.

In einer bevorzugten Ausgestaltung der Erfindung kann vorgesehen sein, dass die lackhaltige Deckschicht einen gehärteten Decklack aufweist, insbesondere einen gehärteten strahlungshärtbaren Decklack.

Gehärtete strahlungshärtbare Decklacke weisen besonders gute Verschleißschutzeigenschaften auf und können insbesondere besonders gute haptische und/oder optische Eigenschaften aufweisen. Durch strahlungshärtbare Decklacke kann zudem die Strukturierung der lackhaltigen Deckschicht besonders einfach erzeugbar sein.

In einer bevorzugten Ausgestaltung der Erfindung kann vorgesehen sein, dass die lackhaltige Deckschicht einen gehärteten acrylatbasierten Decklack aufweist, insbesondere einen gehärteten polyurethanmodifizierten acrylatbasierten Decklack.

In einer bevorzugten Ausgestaltung, nicht gemäß der beanspruchten Erfindung, kann vorgesehen sein, dass die lackhaltige Deckschicht Hartstoffe aufweist, vorzugsweise in einer Menge zwischen 5 Gew.-% und 40% Gew.-%, wobei die Hartstoffe vorzugsweise einen mittleren Korndurchmesser zwischen 10 µm und 250 µm aufweisen.

Unter dem Begriff "Hartstoffe" werden Stoffe verstanden, die eine ausreichende Härte aufweisen. Beispielsweise können die Hartstoffe eine Härte nach Mohs von wenigstens ≥ 8, vorzugsweise wenigstens ≥ 9 aufweisen. Beispiele für geeignete Hartstoffe sind Titannitrid, Titancarbid, Siliciumnitrid, Siliciumcarbid, Borcarbid, Wolframcarbid, Tantalcarbid, Aluminiumoxid (Korund), Zirconiumoxid, Zirconiumnitrid oder Mischungen dieser.

Dadurch wird vorteilhafter Weise erreicht, dass die strukturierte lackhaltige Deckschicht besonders abriebfest sein kann. Hartstoffe in der lackhaltigen Deckschicht ermöglichen einen Abriebschutz der Struktur nach dem Härten der lackhaltigen Deckschicht. Dadurch kann erreicht werden, dass die Struktur durch Beanspruchung weniger abstumpft.

In einer bevorzugten Ausgestaltung, nicht gemäß der beanspruchten Erfindung, kann vorgesehen sein, dass die lackhaltige Deckschicht eine Dicke von ≥ 1 µm bis ≤ 5 mm aufweist, vorzugsweise von ≥ 1 µm bis ≤ 200 µm, insbesondere von ≥ 1 µm bis ≤ 20 µm aufweist.

Dadurch wird vorteilhafter Weise erreicht, dass die lackhaltige Deckschicht eine ausreichend tiefe Struktur aufweisen kann, so dass ein besonders guter haptischer Eindruck erreicht werden kann. Zudem wird vorteilhafterweise erreicht, dass die Härtung der Deckschicht ausreichend schnell stattfinden kann, sodass die Struktur nicht durch etwaiges Zerfließen der Deckschicht verändert wird.

Mit der Erfindung wird ferner ein Verfahren zum Herstellen eines Paneels mit strukturierter Lackoberfläche gemäß Anspruch 8 vorgeschlagen.

Es hat sich in überraschender Weise gezeigt, dass ein derartiges Verfahren eine besonders einfache Herstellung von Paneelen mit strukturierter Lackoberfläche erlaubt, da als Basispaneel ein einfaches Paneel mit Melaminharzschicht verwendet werden kann, wie es in sehr großen Mengen hergestellt wird. Folglich muss, um eine Strukturierung des Paneels zu erreichen, der etablierte Prozess nicht aufwändig geändert werden, sondern die Strukturierung kann im Anschluss erfolgen.

Unter dem Begriff "Härten" ist dabei zu verstehen, dass ein formbares Material seine Formbarkeit verliert. Beispielsweise kann ein flüssiges formbares Material verfestigt werden. Ein plastisch verformbarer Feststoff kann sich beispielsweise durch Härten in einen elastisch verformbaren Feststoff umwandeln. Dabei kann bei einem zumindest teilweisen Härten das Material teilweise seine Formbarkeit verlieren, also seine Formbarkeit an bestimmten Stellen verlieren, beispielsweise an der Oberfläche. Es kann außerdem darunter verstanden werden, dass die Formbarkeit nur verringert wird und das Material nicht vollständig unformbar wird. Es kann darunter auch ein vollständiges Härten verstanden werden.

In einer bevorzugten Ausgestaltung der Erfindung kann vorgesehen sein, dass das Ausbilden der Haftvermittlerschicht ein Aufbringen der Haftvermittlerzusammensetzung auf die Melaminharzschicht und ein Trocknen der Haftvermittlerzusammensetzung auf der Melaminharzschicht umfasst.

Durch das Aufbringen der Haftvermittlerzusammensetzung auf die Melaminharzschicht kann die Haftvermittlerzusammensetzung beim Ausbilden der Haftvermittlerschicht Unebenheiten der Melaminharzschicht ausgleichen. Zudem kann erreicht werden, dass die Haftvermittlerschicht flächendeckend auf der Melaminharzschicht ausgebildet wird, so dass eine gleichmäßige Haftung erreicht werden kann. Durch das Trocknen der Haftvermittlerzusammensetzung kann erreicht werden, dass Lösungsmittel vor einem Härten der Haftvermittlerzusammensetzung aus der Haftvermittlerzusammensetzung entfernt werden können. Dadurch kann erreicht werden, dass die Haftvermittlerzusammensetzung beim Aufbringen Lösungsmittel aufweisen kann. Durch Lösungsmittel können die Aufbringeigenschaften der Haftvermittlerzusammensetzung vorteilhafter weise eingestellt werden.

In einer Ausgestaltung, nicht gemäß der beanspruchten Erfindung, kann vorgesehen sein, dass das das Aufbringen der Haftvermittlerzusammensetzung auf die Melaminharzschicht ein Walzen umfasst.

Durch das Walzen kann vorteilhafter weise erreicht werden, dass die Haftvermittlerzusammensetzung besonders gleichmäßig verteilt werden kann. Zudem kann erreicht werden, dass die ausgebildete Haftvermittlerschicht besonders dünn ist. Dadurch wird insbesondere der optische Eindruck des Paneels besonders wenig beeinträchtigt und zugleich eine ausreichend gute Haftvermittlung zwischen der Melaminharzschicht und der lackhaltigen Deckschicht erreicht.

In einer bevorzugten Ausgestaltung, nicht gemäß der beanspruchten Erfindung, kann vorgesehen sein, dass bei dem Walzen die Haftvermittlerzusammensetzung getrocknet wird.

Dadurch kann erreicht werden, dass nach dem Walzen die Haftvermittlerzusammensetzung gut verteilt bleibt.

In einer bevorzugten Ausgestaltung der Erfindung kann vorgesehen sein, dass das Ausbilden der Haftvermittlerschicht ein Härten der Haftvermittlerzusammensetzung durch elektromagnetische Strahlung und/oder thermisches Härten umfasst.

Durch das Härten kann erreicht werden, dass die Haftvermittlerzusammensetzung reagiert und sich insbesondere bereits mit der Melaminharzschicht verbindet. Zugleich kann jedoch erreicht werden, dass die ausgebildete Haftvermittlerschicht weiterhin ausreichend an die lackhaltige Deckschicht haftet.

In einer bevorzugten Ausgestaltung der Erfindung kann vorgesehen sein, dass die Haftvermittlerzusammensetzung durch UV-Strahlung und/oder IR-Strahlung, gehärtet wird.

Dadurch wird vorteilhafter Weise eine besonders schnelle und gleichmäßige Härtung erreicht.

In einer Ausgestaltung, nicht gemäß der beanspruchten Erfindung, kann vorgesehen sein, dass der Decklack eine Kunststoffzusammensetzung aufweist, bevorzugt eine Acrylatbasierte Kunststoffzusammensetzung, insbesondere eine polyurethanmodifizierte Acrylat-Kunststoffzusammensetzung. Es versteht sich, dass dabei der Decklack die Kunststoffzusammensetzung in einer noch ungehärteten Form aufweist, so dass das Strukturieren der Deckschicht möglich ist.

Dadurch wird vorteilhafter Weise erreicht, dass die lackhaltige Deckschicht besonders gute Schutzeigenschaften, wie Stabilität, Kratzfestigkeit, Hitzebeständigkeit, Wasserbeständigkeit und dergleichen, aufweist.

In einer bevorzugten Ausgestaltung, nicht gemäß der beanspruchten Erfindung, kann die Kunststoffzusammensetzung ein Dipropylenglykoldiacrylat, bevorzugt in einer Menge von > 0 bis ≤ 15 Gew.-% bezogen auf die Kunststoffzusammensetzung, und ein Reaktionsprodukt aus Pentaerythrit, Epichlorhydrin und Acrylsäure, bevorzugt in einer Menge von ≥ 2 bis ≤ 15 Gew.-% bezogen auf die Kunststoffzusammensetzung, aufweisen.

In einer bevorzugten Ausgestaltung, nicht gemäß der beanspruchten Erfindung, kann die Kunststoffzusammensetzung zusätzlich einen Katalysator aufweisen, bevorzugt in einer Menge von ≥ 1 bis ≤ 10 Gew.-% bezogen auf die Kunststoffzusammensetzung. Bevorzugt kann der Katalysator ein tertiäres Ammoniumsalz sein, insbesondere ein tertiäres Ammoniumsalz ausgewählt aus der Gruppe bestehend aus Tetrabutlyammoniumbromid, Methyltrioctylammoniumchlorid, Benzyltriethylammoniumchlorid, Hexadecyltrimethylammoniumbromid und Mischungen davon. In einer besonders bevorzugten Ausgestaltung der Erfindung kann der Katalysator Tetrabutlyammoniumbromid sein.

In einer bevorzugten Ausgestaltung, nicht gemäß der beanspruchten Erfindung, kann die Kunststoffzusammensetzung zusätzlich einen Photoinitiator aufweisen, bevorzugt in einer Menge von ≥ 0,1 bis ≤ 2 Gew.-% bezogen auf die Kunststoffzusammensetzung.

In einer bevorzugten Ausgestaltung, nicht gemäß der beanspruchten Erfindung, kann der Photoinitiator ein Phosphinoxid sein, bevorzugt ein aromatisches Phosphinoxid, insbesondere Phenylbis(2,4,6-trimethylbenzoyl)-Phosphinoxid.

In einer weiteren Ausgestaltung, nicht gemäß der beanspruchten Erfindung, kann vorgesehen sein, dass die lackhaltige Deckschicht eine Dicke von ≥ 1 µm bis ≤ 5 mm aufweist, vorzugsweise von ≥ 10 µm bis ≤ 200 µm, insbesondere von ≥ 50 µm bis ≤ 60 µm. Es kann dabei vorgesehen sein, dass die lackhaltige Deckschicht in einer Auftragsmenge von ≥ 50 g/m² bis ≤ 100 g/m², vorzugsweise ≥ 60 g/m² bis ≤ 80 g/m², beispielsweise 70 g/m², auf die Haftvermittlerschicht aufgebracht wird.

In einer Ausgestaltung der Erfindung kann vorgesehen sein, dass die lackhaltige Deckschicht ein durch UV-Strahlung und/oder IR-Strahlung härtbares Material.

Dadurch wird vorteilhafter Weise erreicht, dass die Härtung besonders schnell und örtlich gezielt stattfinden kann. Unter einem durch elektromagnetische Strahlung härtbaren Material wird erfindungsgemäß ein Material verstanden, in dem durch elektromagnetische Strahlung eine chemische Reaktion in Gang gebracht werden kann, wodurch das Material härter wird. Beispielsweise kann diese chemische Reaktion eine Polymerisation oder eine Vernetzungsreaktion sein.

In einer Ausgestaltung, nicht gemäß der beanspruchten Erfindung, kann vorgesehen sein, dass das Strukturieren der lackhaltigen Deckschicht nach zumindest einem teilweisen Härten durch ein Einprägen der Struktur durchgeführt wird. Beispielsweise kann die Struktur mit einer Kurztaktpresse oder einer Bandpressen eingeprägt werden.

Dadurch kann vorteilhafterweise das Strukturieren der lackhaltigen Deckschicht besonders schnell und kostengünstig sein.

In einer Ausgestaltung der Erfindung kann vorgesehen sein, dass das Strukturieren der lackhaltigen Deckschicht mit einem Digitaldruckverfahren durch Aufsprühen einer Verdrängungstinte mit einem Tintenstrahl-Verfahren durchgeführt wird.

Unter dem Begriff "Aufsprühen" wird verstanden, dass ein Material als Aerosolstrahl auf einen Untergrund in Form von Partikeln und/oder Tropfen aufgebracht wird. Unter dem Begriff "Verdrängungstinte" wird eine Tinte verstanden, beispielweise eine Flüssigkeit, Lösung oder Suspension, die beim Auftreffen auf ein formbares Material dieses teilweise verdrängt. Unter dem Begriff "Tintenstrahl-Verfahren" wird ein Verfahren verstanden, in welchem über eine oder mehrere Düsen eine Tinte in einer Matrix aufgetragen wird.

Dadurch wird vorteilhafter Weise erreicht, dass die lackhaltige Deckschicht durch das Auftreffen der Verdrängungstinte strukturiert wird. Es können dabei an den Stellen, an denen die Tinte auftrifft, durch den Aufprall eines Tropfens oder Partikels Vertiefungen wie Krater oder Täler entstehen, an dessen Boden die Tinte verbleibt. Durch die Verdrängung bei der Entstehung der Vertiefung kann zudem ein Wall um die Vertiefung entstehen, der eine Erhöhung darstellt.

In einer Ausgestaltung, nicht gemäß der beanspruchten Erfindung, kann vorgesehen sein, dass die Verdrängungstinte im Wesentlichen aus einer Tintenzusammensetzung besteht ausgewählt aus der Gruppe bestehend aus, Acrylat-basiertem Kunststoff, polyurethanmodifiziertem Acrylat-Kunststoff, Wasser, organischem Lösungsmittel oder Mischungen davon.

Dadurch kann vorteilhafter Weise erreicht werden, dass die Verdrängungstinte einerseits gut gesprüht werden kann und andererseits gute Verdrängungseigenschaften aufweist.

In einer bevorzugten Ausgestaltung, nicht gemäß der beanspruchten Erfindung, kann vorgesehen sein, dass die Tintenzusammensetzung ein Ethoxyethylacrylat, vorzugsweise 2-(2-Ethoxyethoxy)-ethylenacrylat, vorzugsweise in einer Menge von ≥ 20 bis ≤ 40 Gew.-%, bezogen auf die Tintenzusammensetzung, aufweist. Zusätzlich kann vorgesehen sein, dass die Tintenzusammensetzung ein ethoxyliertes Polyol verestert mit Acrylsäure, vorzugsweise 1,1,1- Trimethylolpropanethoxylattriacrylat, vorzugsweise in einer Menge von ≥ 20 bis ≤ 40 Gew.-%, bezogen auf die Tintenzusammensetzung, aufweist. Zusätzlich kann vorgesehen sein, dass die Tintenzusammensetzung ein Urethanacrylat, vorzugsweise in einer Menge von ≥ 10 bis ≤ 20 Gew.-%, bezogen auf die Tintenzusammensetzung, aufweist. Zusätzlich kann vorgesehen sein, dass die Tintenzusammensetzung Pentaerythritacrylsäureester, vorzugsweise in einer Menge von ≥ 5 bis ≤ 10 Gew.-%, bezogen auf die Tintenzusammensetzung, aufweist. Außerdem kann vorgesehen sein, dass die Tintenzusammensetzung aminmodifizierte Acryloligomere, insbesondere Reaktionsprodukte von Tripropylenglycoldiacrylat mit Diethylamin, vorzugsweise in einer Menge von ≥ 5 bis ≤ 10 Gew.-%, bezogen auf die Tintenzusammensetzung, aufweist.

In einer Ausgestaltung, nicht gemäß der beanspruchten Erfindung, kann vorgesehen sein, dass die Verdrängungstinte beim Härten der lackhaltigen Deckschicht gehärtet und mit der lackhaltigen Deckschicht vernetzt wird.

Dadurch wird vorteilhafter Weise erreicht, dass eine besonders stabile Strukturierung erzeugt werden kann, da sich die Verdrängungstinte mit der lackhaltigen Deckschicht verbindet.

In einer Ausgestaltung, nicht gemäß der beanspruchten Erfindung, kann vorgesehen sein, dass die Verdrängungstinte beim Härten der lackhaltigen Deckschicht verdunstet wird.

Dadurch wird vorteilhafter Weise erreicht, dass besonders tiefe Strukturen ermöglicht werden, da die aufgetragene Verdrängungstinte aus den Vertiefungen wieder entfernt wird.

In einer Ausgestaltung, nicht gemäß der beanspruchten Erfindung, kann vorgesehen sein, dass eine Tropfengeschwindigkeit, ein Tropfenvolumen und eine Position der aufgesprühten Verdrängungstinte nach einer dreidimensionalen digitalen Vorlage variiert werden.

Durch die Variation und Kontrolle der Tropfengeschwindigkeit kann vorteilhafter Weise erreicht werden, dass Strukturen mit unterschiedlicher Tiefe erzeugt werden können. Zudem wird erreicht, dass Strukturen mit unterschiedlicher Wallschärfe erzeugt werden. Es kann also insbesondere variiert werden, ob die Struktur scharfe oder stumpfe Kanten aufweist. Durch die Variation des Tropfenvolumens kann ebenfalls die Tiefe der Struktur variiert werden. Außerdem kann insbesondere die Breite von Vertiefungen variiert werden. Durch die Variation der Position wird eingestellt, wo sich Vertiefungen und Erhöhungen befinden. Dadurch wird insgesamt eine vollständige Kontrolle über die Strukturierung erreicht, so dass eine gewünschte Struktur entsprechend einer dreidimensionalen digitalen Vorlage erzeugt werden kann. Unter dem Begriff "dreidimensionale digitale Vorlage" wird dabei erfindungsgemäß eine Vorlage verstanden, die dreidimensional eine Struktur wiedergibt, wobei die Vorlage beispielsweise in Form eines CAD-Modells auf einem digitalen Medium gespeichert vorliegen kann.

In einer Ausgestaltung, nicht gemäß der beanspruchten Erfindung, kann vorgesehen sein, dass die digitale Vorlage anhand eines Dekors erzeugt wird, wobei die digitale Vorlage der Haptik des Dekors entsprechende komplementäre Vertiefungen und Erhöhungen vorsieht.

Dadurch wird vorteilhafter Weise erreicht, dass die haptische Wahrnehmung der Verschleißschutzfolie mit der optischen Wahrnehmung eines Dekors übereinstimmt, so dass beispielsweise ein Dekorpaneel einen besonders hochwertigen Gesamteindruck macht.

In einer Ausgestaltung, nicht gemäß der beanspruchten Erfindung, kann vorgesehen sein, dass die Härtung mit UV-Strahlung mit einer Wellenlänge in einem Bereich von ≥ 10 nm bis ≤ 450 nm, vorzugsweise von ≥ 200 nm bis ≤ 410 nm durchgeführt wird.

In einer weiteren Ausgestaltung, nicht gemäß der beanspruchten Erfindung, kann vorgesehen sein, dass die Härtung in einem ersten Härtungsschritt mit UV-Strahlung in einem Bereich von ≥ 315 nm bis ≤ 450 nm, vorzugsweise ≥ 380 nm bis ≤ 410 nm, durchgeführt und in einem zweiten Härtungsschritt mit UV-Strahlung in einem Bereich von ≥ 10 nm bis ≤ 250 nm, vorzugsweise von ≥ 170 nm bis ≤ 225 nm durchgeführt wird.

Dadurch kann vorteilhafter Weise erreicht werden, dass die Oberfläche besonders stark gehärtet wird. Dadurch kann auch eine besonders hohe chemische Widerstandsfähigkeit erreicht werden. Zudem kann dadurch erreicht werden, dass eine gute Härtung auch ohne

Photoinitiatoren oder mit nur einer geringen Menge von Photoinitiator ermöglicht wird.

Weiterhin kann dadurch eine Härtung mit nur geringem Wärmeeintrag ermöglicht werden.

In einer weiteren Ausgestaltung, nicht gemäß der beanspruchten Erfindung, kann dabei insbesondere vorgesehen sein, dass die lackhaltige Deckschicht in dem zweiten Härtungsschritt mit UV-Strahlung von einer Strahlungsquelle mit einer Leistung von ≥ 5 bis ≤ 30 W/cm bestrahlt wird.

Dadurch kann vorteilhafter weise erreicht werden, dass nur wenig Wärme bei der Härtung in die lackhaltige Deckschicht eingetragen wird. Dadurch können außerdem unerwünschte Verformungen vermieden werden und die lackhaltige Deckschicht kann trotzdem ausreichen gut gehärtet werden.

In einer Ausgestaltung, nicht gemäß der beanspruchten Erfindung, kann dabei vorgesehen sein, dass bei der Härtung, insbesondere in dem zweiten Härtungsschritt, das Volumen zwischen der UV-Strahlungsquelle und der lackhaltigen Deckschicht eine Inertgasatmosphäre aufweist. Darunter ist zu verstehen, dass ein Inertgas, beispielsweise N2 oder ein Edelgas, die Luft im Bereich zwischen UV-Strahlungsquelle und lackhaltiger Deckschicht im Wesentlichen verdrängt hat. Insbesondere ist darunter zu verstehen, dass im Wesentlichen kein Sauerstoff der direkten UV-Strahlung zwischen UV-Strahlungsquelle und lackhaltiger Deckschicht ausgesetzt wird.

Dadurch kann vorteilhafter Weise erreicht werden, dass mit besonders kurzen Wellenlängen getrocknet werden kann. Es kann dabei erreicht werden, dass die UV-Strahlung vergleichsweise weniger absorbiert wird. Zudem kann dabei erreicht werden, dass die UV-Strahlung keine Reaktionen in der Luft, wie beispielsweise die Reaktion zu Ozon, herbeiführt. Zudem können damit unerwünschte Oberflächenreaktionen vermieden werden, so dass eine besonders stabile Oberfläche entsteht.

In einer Ausgestaltung, nicht gemäß der beanspruchten Erfindung, kann vorgesehen sein, dass die Härtung zeitlich weniger als 5 s, vorzugsweise weniger als 2 s, insbesondere weniger als 0,5 s nach der Strukturierung beginnt.

Dadurch wird vorteilhafter Weise erreicht, dass die Strukturierung sich nicht durch ein nachträgliches Zerfließen vor der Härtung verändert.

In einer Ausgestaltung, nicht gemäß der beanspruchten Erfindung, kann vorgesehen sein, dass vor der Strukturierung die lackhaltige Deckschicht vorgehärtet wird.

Dadurch wird vorteilhafter Weise erreicht, dass die Viskosität der lackhaltigen Deckschicht angepasst werden kann. So kann erreicht werden, dass die Strukturierung besonders detailgetreu erzeugt werden kann. Darunter kann auch verstanden werden, dass kurz vor der Strukturierung eine Härtung in Gang gesetzt wird, so dass während der Strukturierung die gebildeten Strukturen eine Härte erreichen, die ausreicht, um nachträgliches Zerfließen vor einer abschließenden Härtung zu vermeiden.

Die Erfindung ist nachfolgend anhand der Figur weiter erläutert. Die Figuren zeigt eine mögliche Ausgestaltung der Erfindung. Prinzipiell sind jedoch auch Kombinationen oder Abwandlungen der Ausgestaltung im Rahmen des beigefügten Anspruchssatzes möglich.

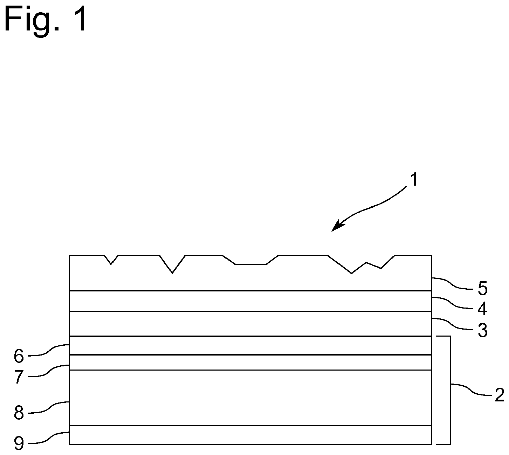

Fig. 1 zeigt schematisch den Aufbau eines Paneels mit strukturierter Lackoberfläche.

Im Detail zeigt Fig. 1 schematisch den Querschnitt eines Paneels 1 mit strukturierter Lackoberfläche. Das Paneel weist ein Basispaneel 2, eine Melaminharzschicht 3, eine Haftvermittlerschicht 4 und eine lackhaltige Deckschicht 5 auf, wobei die Melaminharzschicht 3 auf einer Oberfläche des Basispaneels 2 angeordnet ist, die Haftvermittlerschicht 4 auf der Melaminharzschicht 3 angeordnet ist und die lackhaltige Deckschicht 5 auf der Haftvermittlerschicht 4 angeordnet ist, wobei die lackhaltige Deckschicht 5 strukturiert ist.

Das Basispaneel 2 des gezeigten Ausführungsbeispiels weist dabei eine ein Dekor aufweisende Dekorschicht 6 auf. Die Melaminharzschicht 3 ist dabei auf der Dekorschicht 6 angeordnet. Zusätzlich weist das Basispaneel 2 eine weitere Melaminharzschicht 7, eine Trägerplatte 8 und ein Gegenzugpapier 9 auf.

Das Paneel 1 wurde hergestellt, indem zunächst auf die Dekorschicht 6 des Basispaneels 2 mit Dekorschicht 6, Melaminharzschicht 7, Trägerplatte 8 und Gegenzugpapier 9 eine Melaminharzschicht 3 aufgebracht wurde. Auf das so hergestellte Basispaneel 2 mit auf der Oberfläche des Basispaneels 2 angeordneter Melaminharzschicht 3 wurde eine Haftvermittlerzusammensetzung aufgewalzt und unter Ausbildung der Haftvermittlerschicht 4 gehärtet.

Anschließend wurde ein Decklack auf die Haftvermittlerschicht 4 aufgebracht, mittels eines Digitaldruckverfahrens strukturiert und anschließend gehärtet, wobei die die strukturierte lackhaltige Deckschicht 5 ausgebildet wurde.

### Bezugszeichen

- 1: Paneel mit strukturierter Lackoberfläche
- 2: Basispaneel
- 3: Melaminharzschicht
- 4: Haftvermittlerschicht
- 5: lackhaltige Deckschicht
- 6: Dekorschicht
- 7: weitere Melaminharzschicht
- 8: Träger
- 9: Gegenzugpapier

## Patentansprüche

1. Paneel (1) mit strukturierter Lackoberfläche, aufweisend ein Basispaneel (2), eine Melaminharzschicht (3), eine Haftvermittlerschicht (4) und eine lackhaltige Deckschicht (5), wobei die Melaminharzschicht auf einer Oberfläche des Basispaneels angeordnet ist, die Haftvermittlerschicht auf der Melaminharzschicht angeordnet ist und die lackhaltige Deckschicht auf der Haftvermittlerschicht angeordnet ist, wobei die lackhaltige Deckschicht strukturiert ist und wobei das Basispaneel eine ein Dekor aufweisende Dekorschicht (6) aufweist und die Melaminharzschicht auf der Dekorschicht angeordnet ist, **dadurch gekennzeichnet, dass** die Haftvermittlerschicht eine gehärtete säurehärtbare und/oder strahlungshärtbare Haftvermittlerzusammensetzung aufweist, welche eine polyurethanmodifizierte acrylatbasierte Zusammensetzung umfasst.

2. Paneel nach Anspruch 1, wobei die Struktur der lackhaltigen Deckschicht zumindest in Teilbereichen synchron zum Dekor der Dekorschicht ist.

3. Paneel nach einem der vorherigen Ansprüche, wobei das Basispaneel an die Oberfläche angrenzende Kanten aufweist und die lackhaltige Deckschicht zusätzlich auf den Kanten angeordnet ist.

4. Paneel nach einem der vorhergehenden Ansprüche, wobei die Haftvermittlerzusammensetzung Dipentaerythritol-Acrylat und ethoxyliertes Trimethylpropantriacrylat aufweist, vorzugsweise in einem Massenverhältnis von 1:2 bis 3:1.

5. Paneel nach einem der vorhergehenden Ansprüche, wobei die Haftvermittlerzusammensetzung zusätzlich Wasser aufweist und optional 2-Butoxyethanol, 4-Ethylmorpholin, 1,2-Benzisothiazol-3(2H)-on, Zinkpyrithion, und/oder Reaktionsmasse aus 5-Chlor-2-methyl-4-isothiazolin-3-on und 2-Methyl-2H-isothiazol-3-on.

6. Paneel nach einem der vorherigen Ansprüche, wobei die lackhaltige Deckschicht einen gehärteten Decklack aufweist, insbesondere einen gehärteten strahlungshärtbaren Decklack.

7. Paneel nach einem der vorherigen Ansprüche, wobei die lackhaltige Deckschicht einen gehärteten acrylatbasierten Decklack aufweist, insbesondere einen gehärteten polyurethanmodifizierten acrylatbasierten Decklack.

8. Verfahren zum Herstellen eines Paneels (1) mit strukturierter Lackoberfläche nach einem der vorherigen Ansprüche, aufweisend zumindest die Verfahrensschritte:
a. Bereitstellen eines Basispaneels (2) mit einer auf eine Oberfläche des Basispaneels angeordneten Melaminharzschicht (3),
b. Ausbilden einer Haftvermittlerschicht (4) auf der Melaminharzschicht auf Basis einer Haftvermittlerzusammensetzung,
c. Ausbilden einer lackhaltigen Deckschicht (5) auf der Haftvermittlerschicht auf Basis eines Decklacks, wobei das Basispaneel, die Haftvermittlerzusammensetzung und der Decklack nach einem der vorherigen Ansprüche ausgestaltet sind, und
wobei das Ausbilden der lackhaltigen Deckschicht ein Strukturieren und ein Härten des Decklacks umfasst, und wobei als Haftvermittlerzusammensetzung eine säurehärtbare und/oder strahlungshärtbare Haftvermittlerzusammensetzung aufgetragen wird, welche eine polyurethanmodifizierte acrylatbasierte Zusammensetzung umfasst.

9. Verfahren nach Anspruch 8, wobei das Ausbilden der Haftvermittlerschicht ein Aufbringen der Haftvermittlerzusammensetzung auf die Melaminharzschicht und ein Trocknen der Haftvermittlerzusammensetzung auf der Melaminharzschicht umfasst.

10. Verfahren nach einem der Ansprüche 8 oder 9, wobei das Ausbilden der Haftvermittlerschicht ein Härten der Haftvermittlerzusammensetzung durch elektromagnetische Strahlung und/oder thermisches Härten umfasst.

11. Verfahren nach einem der Ansprüche 8 bis 10, wobei die lackhaltige Deckschicht durch UV-Strahlung und/oder IR-Strahlung gehärtet wird.

12. Verfahren nach einem der Ansprüche 8 bis 11, wobei das Strukturieren der lackhaltigen Deckschicht mit einem Digitaldruckverfahren durch Aufsprühen einer Verdrängungstinte mit einem Tintenstrahl-Verfahren durchgeführt wird.

## Claims

1. Panel comprising a structured lacquer surface, including a base panel (2), a melamine resin layer (3), an adhesion promoter layer (4) and a lacquer-containing top coat (5), wherein the melamine resin layer is disposed on a surface of the base panel, the adhesion promoter layer is disposed on the melamine resin layer and the lacquer-containing top coat is disposed on the adhesion promoter layer, wherein the lacquer-containing top coat comprises is structured and wherein the base panel comprises a decorative layer comprising a decoration, **characterized in that** the adhesion promoter layer comprises a cured acid-curable and/or radiation-curable adhesion promoter composition, wherein the adhesion promoter layer comprises a cured acid-curable and/or radiation-curable adhesion promoter composition comprising a polyurethane-modified acrylate-based composition.

2. Panel according to the preceding claim, wherein the structure of the lacquer-containing top coat is synchronous with the decoration of the decorative layer at least in partial areas.

3. Panel according to any one of the preceding claims, wherein the base panel comprises edges adjacent to the surface and the lacquer-containing top coat is additionally disposed on the edges.

4. Panel according to any one of the preceding claims, wherein the adhesion promoter composition comprises dipentaerythritol acrylate and ethoxylated trimethylpropane triacrylate, preferably in a mass ratio of 1:2 to 3:1.

5. Panel according to any one of the preceding claims, wherein the adhesion promoter composition additionally comprises water and optionally 2-butoxyethanol, 4-ethylmorpholine, 1,2-benzisothiazol-3(2H)-one, zinc pyrithione, and/or reaction mass of 5-chloro-2methyl-4-isothiazolin-3-one and 2-methyl-2H-isothiazol-3-one.

6. Panel according to any one of the preceding claims, wherein the lacquer-containing top coat comprises a cured top lacquer, in particular a cured radiation-curable top lacquer.

7. Panel according to any one of the preceding claims, wherein the lacquer-containing top coat comprises a cured acrylate-based top lacquer, in particular a cured polyurethane-modified acrylate-based top lacquer.

8. Method for producing a panel (1) comprising a structured lacquer surface according to any one of the preceding claims, comprising at least the method steps:
a. providing a base (2) panel comprising a melamine resin layer (3) disposed on a surface of the base panel;
b. forming an adhesion promoter layer (4) on the melamine resin layer based on an adhesion promoter composition; and
c. forming a lacquer-containing top coat (5) on the adhesion promoter layer on the basis of a top lacquer,
wherein the base panel, the adhesion promoter composition and the top lacquer are designed according to any one of the preceding claims, and
wherein the forming of the lacquer-containing top coat comprises structuring and curing the top lacquer, and wherein as a adhesion promoter layer a acid-curable and/or radiation-curable adhesion promoter composition comprising a polyurethane-modified acrylate-based composition is applied.

9. Method according to claim 8, wherein forming the adhesion promoter layer comprises applying the adhesion promoter composition onto the melamine resin layer and drying the adhesion promoter composition on the melamine resin layer.

10. Method according to any one of the claims 8 or 9, wherein forming the adhesion promoter layer comprises curing the adhesion promoter composition, preferably by use of electromagnetic radiation and/or thermal curing.

11. Method according to any one of the claims 8 to 10, wherein the lacquer-containing top coat is cured by UV radiation and/or IR radiation.

12. Method according to any one of the preceding claims, wherein the structuring of the lacquer-containing top coat is carried out by use of a digital printing process, preferably by spraying on a displacement ink by means of an inkjet process.

## Revendications

1. Panneau pourvu d'une surface de laque structurée présentant un panneau de base (2), une couche de résine de mélamine (3), une couche de promoteur d'adhérence (4) et une couche de finition contenant de la laque (5),
dans lequel la couche de résine de mélamine est disposée sur une surface du panneau de base, la couche de promoteur d'adhérence est disposée sur la couche de résine de mélamine et la couche de finition contenant de la laque est disposée sur la couche de promoteur d'adhérence, où la couche de finition contenant de la laque est structurée et où le panneau de base présente une couche décorative (6) présentant un décor et la couche de résine de mélamine est disposée au-dessus de la couche décorative, **caractérisé en ce que**
la couche de promoteur d'adhérence présente une composition de promoteur d'adhérence durcie par un durcissement à l'acide et/ou durcissable par rayonnement, laquelle comprend une composition à base d'acrylate modifié au polyuréthane.

2. Panneau selon la revendication 1, dans lequel la couche de finition contenant de la laque est synchronisée au moins dans des zones partielles avec le décor de la couche décorative.

3. Panneau selon l'une des revendications précédentes, dans lequel le panneau de base présente des bords attenants à la surface et le couche de finition contenant de la laque est disposée de manière complémentaire sur les bords.

4. Panneau selon l'une des revendications précédentes, dans lequel la composition de promoteur d'adhérence présente de l'acrylate de dipenta érithritol ou du triacrylate de triméthyl propane, de préférence dans un ratio en masses de 1 : 2 à 1 : 3.

5. Panneau selon l'une des revendications précédentes, dans lequel la composition de promoteur d'adhérence présente, en complément de l'eau, et éventuellement du 2-butoxy éthanol, de la 4-éthyl morpholine, de la 1,2-benzisothiazol-3(2H)-one, du pyrithion de zinc, et/ou une masse réactionnelle de 5-chlor-2-méthyl-4-isothiazolin-3-one et de 2-méthyl-2H-isothiazol-3-one.

6. Panneau selon l'une des revendications précédentes, dans lequel la couche de finition contenant de la laque présente une laque de finition durcie, notamment une laque de finition durcissable par rayonnement durcie.

7. Panneau selon l'une des revendications précédentes, dans lequel la couche de finition contenant de la laque présente une laque de finition à base d'acrylate durcie , notamment une laque de finition à base d'acrylate modifié au polyuréthane durcie.

8. Procédé de fabrication d'un panneau (1) pourvu d'une surface de laque structurée selon l'une des revendications précédentes, présentant au moins les étapes de procédé :
a. de mise en place d'un panneau de base (2) avec une couche de résine de mélamine (3) disposée sur une surface du panneau de base,
b. de formation d'une couche de promoteur d'adhérence (4) sur la couche de résine de mélamine à base d'une composition de promoteur d'adhérence,
c. de formation d'une couche de finition (5) contenant de la laque sur la couche de promoteur d'adhérence à base d'une laque de finition,
dans lequel le panneau de base, la composition de promoteur d'adhésion et la couche de finition sont conçus selon l'une des revendications précédentes, et
dans lequel la formation de la couche de finition contenant de la laque comprend une structuration et un durcissement de la laque de finition, et dans lequel une composition de promoteur d'adhérence durcissable à l'acide et/ou durcissable par rayonnement est déposée en tant que composition de promoteur d'adhérence, laquelle comprend une composition à base d'acrylate modifié au polyuréthane.

9. Procédé selon la revendication 8, dans lequel la formation de la couche de promoteur d'adhérence comprend un dépôt de la composition de promoteur d'adhérence sur la couche de résine de mélamine et un séchage de la composition de promoteur d'adhérence sur la couche de résine de mélamine.

10. Procédé selon l'une des revendications 8 ou 9, dans lequel la formation de la couche de promoteur d'adhérence comprend un durcissement de la composition de promoteur d'adhérence par un rayonnement électromagnétique et/ou un durcissement thermique.

11. Procédé selon l'une des revendications 8 à 10, dans lequel la couche de finition contenant de la laque est durcie par un rayonnement UV et/ou un rayonnement IR.

12. Procédé selon l'une des revendications 8 à 11, dans lequel la structuration de la couche de finition contenant de la laque est effectuée par un procédé d'impression numérique par une pulvérisation d'une encre de déplacement avec un procédé à jet d'encre.
